# EUROPEAN PATENT APPLICATION

(11) **EP 1 553 052 A2**
(43) Date of publication of application: **13.07.2005**
(21) Application number: 04027819.4
(22) Date of filing: 24.11.2004
(51) Int. Cl.: C01B 31/02, H01M 4/96, H01M 8/10

(54) **Carbon nanotube and fuel cell using the same**

(30) Priority: 07.01.2004 KR 2004000996
(71) Applicant: Samsung SDI Co., Ltd., Suwon-si, Gyeonggi-do (KR)
(72) Inventor: Chang, Hyuk, Seongnam-si Gyeonggi-do (KR); Pak, Chan-ho, Seocho-gu Seoul (KR); Wang, Jian Nong, Shanghai 200030 (CN)
(74) Representative: Patentanwälte Ruff, Wilhelm, Beier, Dauster & Partner

(57) **Abstract**

A carbon nanotube for a catalyst support is provided. The carbon nanotube has a length of about 300nm or less, and an aspect ratio of about one to about fifteen. The carbon nanotube has a good broad surface area and better electric conductivity and is opened at both ends, thereby allowing impregnation by a metallic catalyst into the inner side of the carbon nanotube. Such catalyst impregnated carbon nanotube has a broad effective specific surface area, and thus, has an improved efficiency of catalyst utilization, can reduce an amount of the catalyst used and can efficiently diffuse a fuel. Accordingly, when catalyst impregnated carbon nanotube is used in a fuel cell, etc., improvements can be made in the pricing, power density of an electrode, and energy density of a fuel cell.

## Description

The invention relates to a carbon nanotube, in particular a short carbon nanotube for a catalyst support, and a fuel cell using the carbon nanotube in a catalyst impregnated form.

A carbon nanotube is a very fine cylindrical material having a diameter of between several and tens of nanometers, a length of between several and tens of micrometers, strong anisotropy, and various structures, such as single-walled, multi-walled, or a rope structure. In the carbon nanotube, one carbon atom bonds to three other carbon atoms so as to form a hexagonal honeycomb. The carbon nanotube may have a metallic or semiconductor property according to its structure, is mechanically strong (about 100 times stronger than steel), has chemical stability, high thermal conductivity, and a hollow structure. Thus, it can be variously applied in microscopic and macroscopic view. For example, research has been made to apply the carbon nanotube to a memory device, an electric amplifier or gas sensor, an electromagnetic wave shield, an electrode plate of an electrochemical storage device (secondary battery, fuel cell, or super capacitor), a field emission display, a polymer composite, and the like.

Recently, with growing concerns about the environment and the exhaustion of energy resources, and the commercialization of fuel cell automobiles, there is an urgent need for the development of reliable, high-performance fuel cells that are operable at an ambient temperature with high-energy efficiency.

Fuel cells are power generating systems that convert energy produced through the electrochemical reaction of fuel and oxidative gas directly into electric energy. Such fuel cells can be categorized into electrolyte fuel cells containing molten carbonate salt, which are operable at high temperatures, for example temperatures of 500-700°C, electrolyte fuel cells containing phosphoric acid, which are operable around 200°C, and alkaline electrolyte fuel cells and polymer electrolyte fuel cells, which are operable between room temperature and 100°C.

The polymer electrolyte fuel cells include proton exchange membrane fuel cells (PEMFCs) using hydrogen gas as a fuel source and direct methanol fuel cells (DMFCs) using liquid methanol directly applied to an anode as a fuel source. The polymer electrolyte fuel cells, which are emerging as a next generation clean energy source alternative to fossil fuels, have high power density and high energy conversion efficiency. In addition, the polymer electrolyte fuel cells function at an ambient temperature and are easy to hermetically seal and miniaturize, so they can be extensively applied to zero emission vehicles, power generating systems for home use, mobile telecommunications equipment, medical equipment, military equipment, space equipment, and the like.

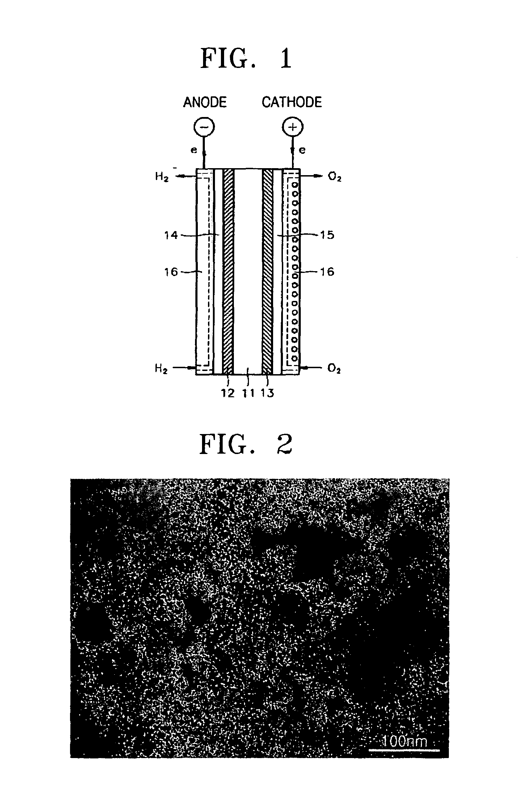

The basic structure of a PEMFC as a power generator producing a direct current through the electrochemical reaction of hydrogen and oxygen is shown in FIG. 1. Referring to FIG. 1, a PEMFC includes a proton-exchange membrane 11 interposed between an anode and a cathode.

The proton-exchange membrane 11 is composed of a solid polymer electrolyte with a thickness of 50µm to 200µm. The anode and cathode respectively include anode and cathode backing layers 14 and 15 for supplying reaction gases, and catalyst layers 12 and 13, in which oxidation/reduction of reaction gases occurs, forming gas diffusion electrodes (hereinafter, the anode and cathode will be referred to as "gas diffusion electrodes"). In FIG. 1, a carbon sheet 16 has gas injection grooves and acts as a current collector. Hydrogen, as a reactant gas, is supplied to the PEMFC, and hydrogen molecules decompose into protons and electrons through an oxidation reaction in the anode. These protons reach the cathode via the proton-exchange membrane 11.

Meanwhile, in the cathode, oxygen molecules receive the electrons from the anode and are reduced to oxygen ions. These oxygen ions react with the protons from the anode to produce water. As shown in FIG. 1, in the gas diffusion electrodes of the PEMFC, the catalyst layers 12 and 13 are formed on the anode and cathode backing layers 14 and 15, respectively. The anode and cathode backing layers 14 and 15 are composed of carbon cloth or carbon paper. The surfaces of the anode and cathode backing layers 14 and 15 are treated so that reaction gases and water can easily permeate into the proton-exchange membrane 11 before and after reaction.

Meanwhile, a DMFC has the same structure as a PEMFC, but uses methanol in a liquid state instead of hydrogen as a reaction gas, which is supplied to anode to produce protons, electrons, and carbon dioxide through an oxidation reaction by aid of a catalyst. Though the DMFC has inferior cell efficiency when compared to the PEMFC, since a fuel is injected in a liquid state, the DMFC can be more easily applied to portable electronic devices than the PEMFC.

To improve the power density and voltage by increasing the energy density of a fuel cell, electrodes, fuels, and electrolyte membranes are being actively researched and, in particular, an attempt has been made to improve the activity of a catalyst used in the electrode.

A catalyst used in the PEMFC or the DMFC is generally Pt or an alloy of Pt and another metal. To ensure cost competitiveness, it is necessary to reduce as much as possible an amount of the metallic catalyst used. Thus, to reduce the amount of the catalyst used while retaining or improving the level of performance of a fuel cell, an electrically conductive carbon material with a broad specific surface area has been used as a support and Pt, etc. has been dispersed in a fine particle state in the support to increase a specific surface area of the catalytic metal. The electrically conductive carbon material broadens a reaction area of reaction gases introduced and the catalytic metal particles are required for undergoing oxidation/reduction of a reaction fuel.

Generally, the catalyst layer is formed on the electrode backing layer through a known coating process after impregnating the catalytic metal particles into carbon powder particles. FIG. 2 is a TEM photograph of a catalyst impregnated carbon in which Pt catalyst particles are impregnated into a general spherical carbon support. According to FIG. 2, ultrafine Pt catalyst particles with a size of 2nm to 5nm are impregnated onto a surface of a carbon particle with a particle diameter of 0.1 µm. In the case of the carbon powder particles, appropriate catalytic activity can be expected only when an amount of catalytic metal per the unit area of square centimeter is 3mg or greater. However, since an amount of the used catalyst is still much, it is necessary to improve an effective specific surface area of a catalyst.

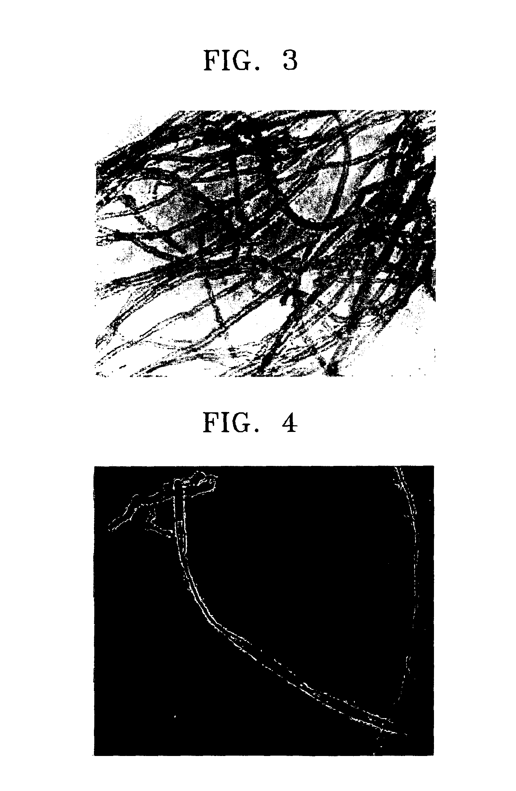

As described above, since the carbon powder used currently had a limit as a support, a carbon support with a higher electrical conductivity and broader specific surface area was required. Thus, it was proposed that a general carbon nanotube was used as a catalyst support. FIG. 3 is a TEM photograph of a general single-walled carbon nanotube. This method using a carbon nanotube as a catalyst support was to utilize a good electric conductivity of a carbon nanotube and contributed to the improvement of an electrochemical reaction efficiency of a catalyst and an electrode power density. As seen from FIG. 3, the length of the carbon nanotube is very much higher than its diameter, so it is difficult to form a catalyst layer having a uniform distribution when forming a catalyst electrode. Also, this carbon nanotube prepared by a conventional preparing method has its ends closed, so a catalyst may be impregnated onto only an outer surface of the carbon nanotube and is very difficult to be impregnated into an inner surface of the carbon nanotube. As a result, the power density is not satisfactorily improved.

To resolve the above problems, a technique utilizing a carbon nanohorn was proposed. The carbon nanohorn refers to a cylindrical material having a structure similar to that of the closed end carbon nanotube, with a part of one closed end cut. A catalyst may be impregnated on the surface of the carbon nanohorn. However, the inner diameter of this conventional carbon nanohorn is quite small, e.g. about 1 nm, so that catalyst particles having a size of 1 nm or more can not be impregnated into the interior of this carbon nanohorn. When a catalyst is impregnated onto only an outer wall of the carbon nanohorn, a broad surface area characteristic which is a greatest advantage of the carbon nanohorn is not utilized. Also, since one end is closed, a fuel source may not smoothly flow when it is used as a catalyst support for a fuel cell, thereby deteriorating a fuel efficiency.

It is the technical problem underlying the invention to provide a carbon nanotube which is able to avoid the difficulties of the prior art mentioned above and in particular can be realized with high specific surface area and can effectively be used as a catalyst impregnated carbon nanotube e.g. as a catalyst support for a fuel cell. It is also an object of the invention to provide for a corresponding fuel cell using such catalyst impregnated carbon nanotube.

The invention solves this problem by providing a carbon nanotube having the features of claim 1 and a fuel cell having the features of claim 8. Advantageous embodiments of the invention are mentioned in the subclaims, the wording of which is herewith incorporated into the specification by reference to avoid unnecessary text repetitions.

The invention provides a carbon nanotube for a catalyst support, having a broad specific surface area and capable of impregnating catalyst particles into the inside thereof, thereby providing a maximum effective specific surface area of a catalyst. The invention also provides a catalyst impregnated carbon nanotube using the short carbon nanotube. The invention also provides a fuel cell using the catalyst impregnated carbon nanotube.

According to an aspect of the invention, there is provided a short carbon nanotube for a catalyst support having both ends opened, a length of about 300nm or less, and an aspect ratio of about one to about fifteen. According to another aspect of the invention, there is provided a catalyst impregnated carbon nanotube in which metallic catalyst particles with an average particle size of about 1 nm to about 5nm, which are found to be of optimum size, are impregnated into an inner wall and an outer wall of a short carbon nanotube having both ends opened, a length of 300nm or less, and an aspect ratio of about one to about fifteen. According to another aspect of the invention, there is provided a fuel cell prepared using the catalyst impregnated carbon nanotube.

Advantageous embodiments of the invention are described in the following and shown in the drawings, in which:
FIG. 1 is a schematic diagram illustrating a general structure of a fuel cell;
FIG. 2 is a TEM photograph of a catalyst impregnated carbon in which Pt catalyst particles are impregnated into a general spherical carbon support;
FIG. 3 is a TEM photograph of a general single wall carbon nanotube;
FIG. 4 is a TEM photograph of a carbon nanotube having defects, which are prepared for producing a short carbon nanotube according to the invention;
FIG. 5 is an SEM photograph of a short carbon nanotube prepared in a first example of the invention;
FIG. 6 is a TEM photograph of a short carbon nanotube prepared in the first example of the invention;
FIG. 7 is a high resolution TEM photograph of a short carbon nanotube prepared in a second example of the invention;
FIG. 8 is a schematic perspective view illustrating a structure of a catalyst impregnated carbon nanotube prepared according to the invention;
FIG. 9 is an SEM photograph of a catalyst impregnated carbon nanotube prepared in a third example of the invention; and
FIG. 10 is a diagram which illustrates the results of performance tests on a fuel cell prepared according to the invention.

A short carbon nanotube for a catalyst support according to an embodiment of the present invention has both ends opened, a length of about 300nm or less, and an aspect ratio of about one to about fifteen. Thus, when impregnating a catalyst, the catalyst can be impregnated to the inner side of the carbon nanotube and a reaction gas or liquid can be diffused through each opened end, thereby providing a maximum effective specific surface area of catalyst particles.

A diameter of the carbon nanotube may be from about 10nm to about 50nm. It is difficult to prepare a carbon nanotube having a diameter less than 10nm and when a diameter of a carbon nanotube is greater than 50nm, the entire specific surface area of a catalyst is undesirably reduced.

The length of the carbon nanotube may preferable be about 50nm or less, and the aspect ratio of the carbon nanotube may be between one and three. The shorter the carbon nanotube is, the more advantageous for impregnating a catalyst it is. When impregnating a catalyst into a carbon nanotube having a length and an aspect ratio within the above ranges, catalyst particles can have a maximum effective specific surface area.

Also, a structure of the carbon nanotube is not particularly restricted and may be multi-walled or single-walled. The carbon nanotube may have a metallic property because it can improve electrical conductivity when being used as an electrode in a fuel cell, and the like.

Various methods for preparing a carbon nanotube, such as an arc discharge, laser vaporization, thermal chemical vapor deposition, plasma enhanced chemical vapor deposition, and the like are proposed. In the case of an arc discharge or laser vaporization, synthesis yield of a carbon nanotube is relatively low, and a large number of carbon clusters in an amorpous state are produced besides the carbon nanotube during synthesizing, which requires a complicated purifying process, and it is difficult to grow a large amount of carbon nanotube on a substrate with a large area. Meanwhile, chemical vapor deposition can synthesize a vertically-oriented carbon nanotube which has a high purity in high yield. Thus, chemical vapor deposition is the most favored method. However, it is very difficult to control a diameter and a length of a carbon nanotube and the length of a carbon nanotube prepared by this method is several micrometers to tens of micrometers, which is not preferred for use as a catalyst support.

The short carbon nanotube for a catalyst support according to an embodiment of the invention may be prepared by shortening a length of a conventional carbon nanotube through mechanical and chemical methods. However, since bonding forces between crystal carbons forming graphite are strong, processing is difficult and a preparing process may be complicated. Thus, it is necessary to shorten a length of a carbon nanotube while preparing it by modifying the preparing process itself. A length of a carbon nanotube may be shortened by lowering a growth temperature during growth of the carbon nanotube of a chemical vapor deposition process using a catalyst. Also, in order to prevent continuous growth of a carbon nanotube, catalyst particles in the form of impurities may be applied to the stabilized carbide or graphite, or particles which are placed in the ends of a carbon nanotube, which is growing, to open the ends, thereby limiting growth of the carbon nanotube.

Of the above methods, a method using the chemical vapor deposition will be described in more detail below.

The short carbon nanotube for a catalyst support may be prepared by injecting carbon source gas at a constant flow rate into a reactor while supplying metal carbonyl as a catalyst source in a gas or liquid state to the reactor to prepare a carbon nanotube, and then rapidly transferring the carbon nanotube from a high temperature region to a low temperature region immediately after the beginning of the growth of the carbon nanotube.

Also, the catalyst particles may be formed in the same manner as in a general method of preparing a carbon nanotube. That is, a catalytic metal layer of cobalt, nickel, iron, or an alloy thereof is formed on a substrate, and then the catalytic metal layer is etched by purging an etchant gas at a constant flow rate to form nano-sized catalytic metal particles.

The short carbon nanotube for a catalyst support is prepared using the chemical vapor deposition. However, it is noted that defects are formed at various positions on the carbon nanotube by rapidly halting the growth before the carbon nanotube significantly grows and then are cut, thereby opening both ends and controlling the length of the carbon nanotube to a maximum of 300nm.

FIG. 4 is a TEM photograph of a carbon nanotube having defects, obtained during preparing a short carbon nanotube for a catalyst support according to an embodiment of the present invention. Referring to FIG. 4, defects are at various positions on the carbon nanotube and are cut to shorten carbon nanotube. The defects are generated because crystallization dose not uniformly occur due to quick changes in the rate of growth of the carbon nanotube. According to the state of defects, the carbon nanotube may be cut during a growth phase to open an end or may be chemically treated with a strong acid once a growth phase is completed, to be first oxidized and cut at a defect portion so as to open an end.

The catalytic metal particles used in the method of preparing the carbon nanotube of the present invention may be formed by supplying metal carbonyl in a liquid or gas state or by dispersing catalytic metal particle precursors on a substrate, and then reducing and etching with an etchant gas. The metal carbonyl is not particularly limited as long as it is known in the art, and iron carbonyl (Fe(CO)₆), nickel carbonyl (Ni(CO)₄), etc. may be used. The etchant gas may be hydrogen or ammonia but other gases known to those skilled in the art may also be used.

Meanwhile, the carbon source gas may be a common gas known to those skilled in the art, for example, methane, ethylene, or acetylene.

To control the growth rate of a carbon nanotube by rapidly cooling immediately after beginning the generation of the carbon nanotube, a reactor is vertically installed and an upper portion is maintained at a temperature of 800°C to 1000°C and a lower portion is maintained at a temperature of 100°C or lower by being thermally isolated from the upper portion, thereby transferring resultants produced in the high temperature region to the low temperature region. Alternatively, a cooling device is placed at a side of a CVD apparatus and a reactor is transferred to the cooling device by a slide-type mechanical device so as to rapidly cool it. Also, particles containing a catalyst are sprayed using nitrogen as a carrier gas to transfer a carbon nanotube to a low temperature region.

A length of the short carbon nanotube for a catalyst support depends on how rapidly it is cooled, a flow rate of a carrier gas, etc. and a diameter thereof depends on a concentration and flow rate of the metal carbonyl supplied for forming a catalyst. Also, when a carbon nanotube is prepared after dispersing metallic catalyst particles on a substrate, the diameter of the carbon nanotube may be controlled by a degree of dispersion of the metallic catalyst particles.

In a method of preparing the short carbon nanotube for a catalyst support, plasma enhanced chemical vapor deposition (PECVD) as well as thermal chemical vapor deposition may be used. In the PECVD, a carbon source gas is injected between two electrodes of a reactor containing a metallic catalyst and microwaves or radio waves is used to transform the carbon source gas into plasma by which a carbon nanotube is able to grow on the electrodes. "Plasma" means a collection of electrons and gas ions generated when free electrons generated by a glow discharge obtain sufficient energy to collide with gas molecules. When a glass substrate is used, since a melting point of the glass substrate is about 600°C, it may be melted when using the conventional thermal chemical vapor deposition. Meanwhile, a carbon nanotube may be synthesized at a relatively low temperature when using the PECVD.

Meanwhile, after preparing the short carbon nanotube according to the present invention, a shorter carbon nanotube may be prepared through an additional process. For example, it may be accomplished through ultrasonic treatment in a liquid under a strong oxidization atmosphere or high energy mechanical processing such as milling. In particular, when the additional shortening process is performed by a chemical method, additional effects such as impurities being removed from the carbon nanotube and a suitable surface for a metallic catalyst to be impregnated being provided may be obtained.

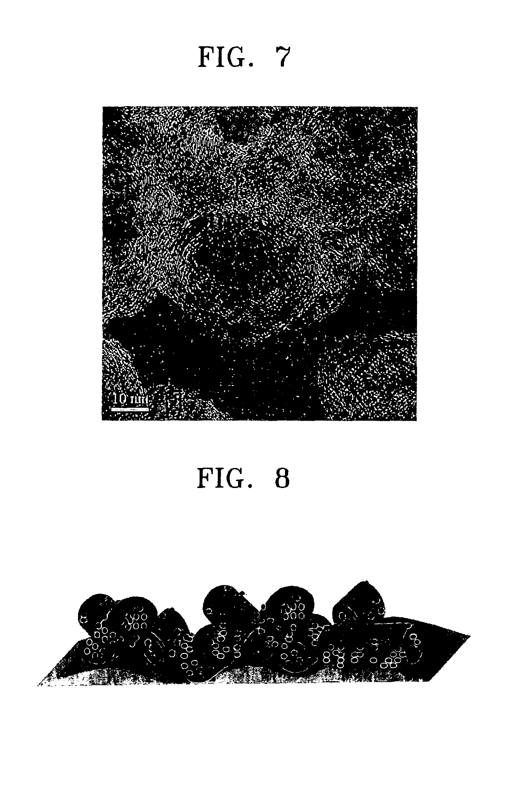

In a catalyst impregnated carbon nanotube according to another embodiment, metallic catalyst particles with an average particle size of 1 nm to 5nm are impregnated onto an inner wall and an outer wall of a short carbon nanotube having both ends opened, a length of 300nm or less, and an aspect ratio of 1 to 15. Since a broad surface area and high electrical conductivity of a carbon nanotube are utilized, an amount of an impregnated catalyst per the unit area is maximized, and a reaction gas or liquid may be diffused through both opened ends, an area of a catalyst particle to be directly contacted with the reaction gas or liquid, i.e. an effective specific surface area of the catalyst particle increases. FIG. 8 schematically illustrates a structure of a catalyst impregnated carbon nanotube prepared according to the invention.

The catalyst impregnated carbon nanotube has similar effects to a conventional impregnated catalyst using carbon powder even at lower amounts and has superior effects to the conventional impregnated catalyst when using the same amount of a catalyst per the unit area. For example, when the catalyst impregnated carbon nanotube is used in an electrode of a fuel cell, the electrically conductive kinetics of the carbon nanotube ensure the highest electrical conductivity, and thus, an activity of catalyst particles can be maximized in relation to a collection of electric current produced. Also, a surface area of the carbon nanotube capable of impregnating a catalyst increases, and thus, a decrease in power density is prevented and energy efficiency is improved even though reducing an amount of a catalytic metal per unit area. Accordingly, cost competitiveness of a product can be ensured. The catalyst impregnated carbon nanotube can be used in a fuel cell and as an electrode material in a general secondary battery or super capacitor.

The catalyst impregnated carbon nanotube may be prepared by preparing a short carbon nanotube for a catalyst support according to an embodiment of the present invention, and then impregnating catalyst particles, such as Pt, using a known method, such as gas phase reduction. In gas phase reduction, a metal salt solution of a catalytic metal precursor, such as a metal salt, in a solvent is impregnated into the carbon nanotube support and dried, and then the metal salt is reduced with hydrogen gas, etc. to impregnate the metallic catalyst. The catalytic metal precursor is not particularly restricted as long as it is a chloride of a catalytic metal. When the catalystic metal is Pt, examples of the catalytic metal precursor include H₂PtCl₆ and PtCl₂.

A diameter of a carbon nanotube used in the catalyst impregnated carbon nanotube may be 10nm to 50nm. It is difficult to prepare a carbon nanotube below this range, and when above this range an entire specific surface area of a catalyst is undesirably reduced, thereby reducing catalytic efficiency. A length of the carbon nanotube may be a maximum of 50nm and an aspect ratio of the carbon nanotube may be 1 to 3. As a carbon nanotube is shorter, it is more advantageous for impregnating a catalyst into the inside thereof. When impregnating a catalyst into a carbon nanotube having a length and an aspect ratio within the above ranges, catalyst particles can have a maximum effective specific surface area. Meanwhile, a structure of the carbon nanotube is not particularly restricted and may be multi-walled or single-walled. It may have a metallic property because it can improve electric conductivity when being used as an electrode in a fuel cell, and the like.

Metallic catalyst particles used in the catalyst impregnated carbon nanotube are not particularly restricted, but may be Pt or a Pt alloy when used in PEMFC or DMFC. The Pt alloy may be an alloy of Pt and Ti, Cr, Mn, Fe, Co, Ni, Cu, Ga, Zr, Hf, Ru, Ir, Pd, Os, or a mixture thereof. In DMFC, methanol is oxidized to generate carbon monoxide as a side product, which causes poisoning of a Pt catalyst. To prevent this poisoning, the Pt alloy catalyst may be used.

An entire specific surface area of the catalyst impregnated carbon nanotube may be 1000m²/g or greater. When the specific surface area is less than 1000m²/g, it is difficult to obtain catalytic metal particles with a fine size and catalytic efficiency is reduced.

The catalyst impregnated carbon nanotube may be used as an active component in an electrode of a fuel cell. The electrode for a fuel cell may be prepared in a conventional manner. For example, the catalyst impregnated carbon nanotube can be dispersed in a solution of an ionomer, such as Nafion, in isopropyl alcohol to prepare a slurry, and then the slurry is coated on a waterproof carbon paper through spray coating and then dried to obtain an electrode.

A fuel cell may be PEMFC and DMFC, but is not limited to these. Fuel cells may be divided into alkaline, phosphoric acid, molten carbonate salt, solid oxide, and solid polymer electrolyte fuel cells according to a type of an electrolyte used therein. In particular, when using a Pt catalyst, the catalyst impregnated carbon nanotube is suitable for alkaline, phosphoric acid, and solid polymer electrolyte fuel cells. Since DMFC has the same structure as the solid polymer electrolyte fuel cell, the catalyst impregnated carbon nanotube may also be used in DMFC. Since a liquid fuel may be efficiently diffused through the inside of the carbon nanotube having both ends opened, the catalyst impregnated carbon nanotube is particularly suitable for DMFC.

The invention will now be described in greater detail with reference to the following examples. The following examples are for illustrative purposes and are not intended to limit the scope of the invention.

### Example 1: Preparation of a carbon nanotube for a catalyst support

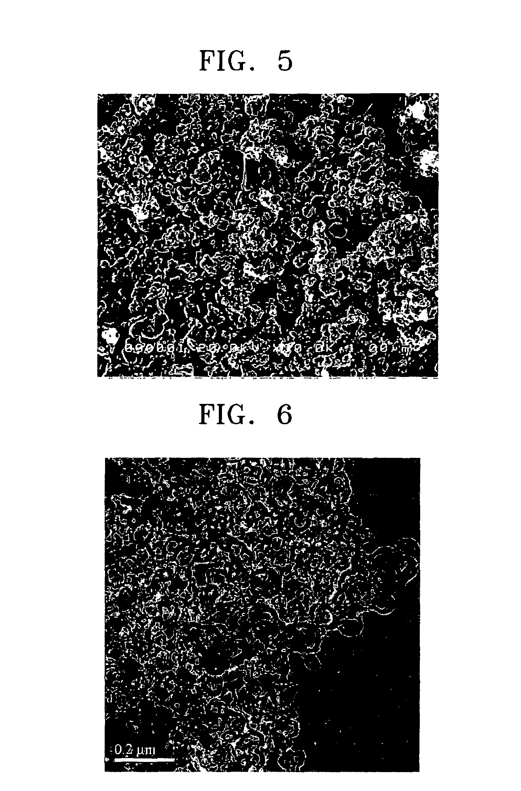

Nitrogen gas was purged into a vertical reactor at a rate of 500 standard cubic centimeter per minute (sccm) under atmospheric pressure while raising a temperature of an upper portion of the vertical reactor to 500°C. Then, to form a catalyst, iron carbonyl was supplied to the reactor in a gas state at a rate of 50sccm and the temperature was held constant at 1000°C. Next, acetylene as a carbon source gas was supplied to the reactor at a rate of 10sccm under atmospheric pressure for 60 minutes to synthesize a carbon nanotube. When the generation of the carbon nanotube began, within 1 minute the carbon nanotube was transferred to a lower portion of the reactor, which was thermally isolated from the upper portion and maintained at a maximum of 100°C, to obtain a short carbon nanotube. The obtained carbon nanotube had a diameter of 50nm and a length of 50nm. An SEM photograph and a TEM photograph for the obtained carbon nanotube are illustrated in FIGS. 5 and 6, respectively.

### Example 2: Preparation of a short carbon nanotube for a catalyst support

A short carbon nanotube was prepared in the same manner as Example 1 except that a flow rate of a carrier gas was 700sccm and a flow rate of iron carbonyl was 30sccm. The obtained carbon nanotube had a diameter of 30nm and a length of 40nm. A high resolution TEM photograph of the obtained carbon nanotube was illustrated in FIG. 7.

### Example 3: Preparation of a catalyst impregnated carbon nanotube

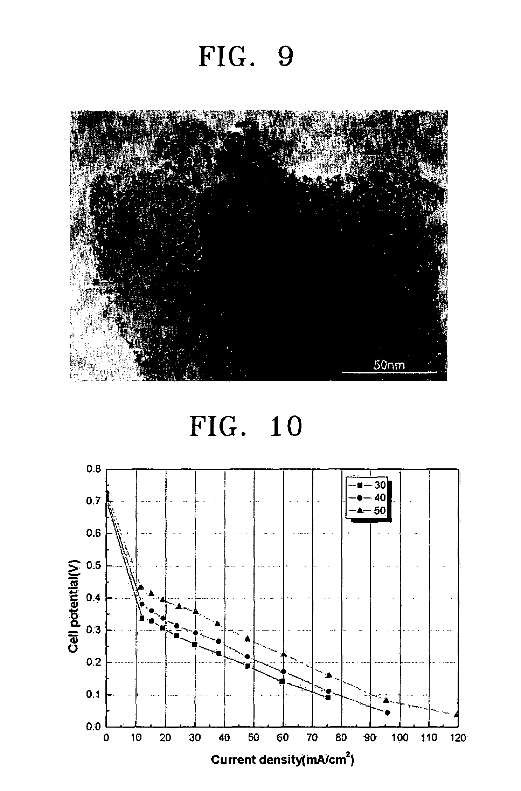

0.5g of the carbon nanotube prepared in Example 1 was placed in a vinyl bag and 0.9616g of H₂PtCl₆ was weighted and dissolved in 0.8ml of acetone. The solution was placed in the vinyl bag containing the carbon support and mixed, and then 0.35ml of acetone was further added thereto and dissolved by thoroughly shaking. This process was repeated once again such that the total amount of acetone added was 1.5ml. The mixture was dried in air for 4 hours, then was transferred to a crucible and finally dried in a drier at 60°C overnight. Then, the crucible was placed in an electric furnace in which nitrogen was allowed to flow for 10 minutes. Next, nitrogen gas was replaced with hydrogen gas and the temperature in the electric furnace was raised from room temperature to 200°C and maintained for 2 hours to reduce a Pt salt impregnated into the carbon support. The hydrogen gas was replaced with nitrogen gas and the temperature in the electric furnace was raised to 250°C at a rate of 5°C/min and maintained at 250°C for 5 hours, and then cooled to room temperature. Resultingly, catalyst impregnated carbon nanotube with a concentration of impregnated Pt equal to 60% by weight was obtained. An SEM photograph of the obtained catalyst impregnated carbon nanotube is illustrated in FIG. 9.

### Example 4: Manufacturing of a fuel cell

The catalyst impregnated carbon nanotube prepared in Example 3 was dispersed in a dispersion solution of Nafion 115 (available from Du-Pont) in isopropyl alcohol to prepare a slurry and was coated on a carbon electrode through a spray process so as to obtain a concentration of 1mg/cm² of the coated catalyst based on a Pt concentration. Then, the electrode was passed through a rolling machine to enhance adhesion between a catalyst layer and a carbon paper, thereby obtaining a cathode. Meanwhile, an anode prepared using a commercially available PtRu Black catalyst was used as an anode to prepare a unit cell.

### Experimental Example 1: Test of performance of the unit cell

Performance of the unit cell prepared in Example 4 was measured at 30°C, 40°C, and 50°C while excessively supplying 2M methanol and air. The results are illustrated in FIG. 10. Although the fuel cell according to the invention used the catalyst per the unit area in an amount of 1mg/cm² or less, it had similar or superior performance to a conventional fuel cell using a catalyst per the unit area in an amount of 2mg/cm² to 4mg/cm².

As described above, the short carbon nanotube according to the invention has a broad surface area and better electric conductivity and has both ends opened, thereby impregnating a metallic catalyst onto the inside thereof. Also, the catalyst impregnated carbon nanotube has a broad effective specific surface area, and thus, has improved efficiency of catalyst utilization, can reduce an amount of the catalyst used and can efficiently diffuse a fuel. Thus, when the catalyst impregnated carbon nanotube is used in a fuel cell, etc., improvements can be made in pricing, power density of an electrode and energy density of a fuel cell.

## Claims

1. A carbon nanotube for a catalyst support,
**characterized in that**
it has both ends opened, a length of about 300nm or less, and an aspect ratio of about one to about fifteen.

2. The carbon nanotube of claim 1, having a diameter of about 10nm to about 50 nm and/or a length of about 50nm or less and/or an aspect ratio of about one to about three.

3. The carbon nanotube of claim 1 or 2, having a multi-walled or a single-walled structure.

4. A carbon nanotube of any of claims 1 to 3, in which metallic catalyst particles with an average particle size of about 1 nm to about 5nm are impregnated onto an inner wall and an outer wall thereof.

5. The carbon nanotube of claim 4, wherein the metallic catalyst particles comprise a Pt or a Pt alloy material.

6. The carbon nanotube of claim 5, wherein an element used in the Pt alloy material is Ti, Cr, Mn, Fe, Co, Ni, Cu, Ga, Zr, Hf, Ru, or a mixture thereof.

7. The carbon nanotube of any of claims 4 to 6, having an entire specific surface area of about 1000m²/g or more.

8. A fuel cell prepared using a catalyst impregnated carbon nanotube of any of claims 4 to 7.
